# EUROPEAN PATENT APPLICATION

(11) **EP 2 434 622 A2**
(43) Date of publication of application: **28.03.2012**
(21) Application number: 11182195.5
(22) Date of filing: 21.09.2011
(51) Int. Cl.: H02K 11/00

(54) **Real time measurement of rotor surface**

(30) Priority: 27.09.2010 US 891028
(71) Applicant: General Electric Company, Schenectady, NY 12345 (US)
(72) Inventor: Rai, Mandar Ranganath, 500081 Andhra Pradesh (IN); Nair, Purushothaman Sasidharan, 500081 Andhra Pradesh (IN); Pulluri, Annapurna, Houston, TX Texas 77070 (US)
(74) Representative: Illingworth-Law, William Illingworth

(57) **Abstract**

Real time measurement of a rotor (110) surface is disclosed. In one aspect, at least one radio frequency identification (RFID) tag (130) with an integrated sensor (135) is placed on the rotor (110) to measure operational data therefrom. An RFID reader (200) reads the operational data measured from the rotor (110) by the at least one RFID tag (130) with the integrated sensor (135) in real time.

## Description

### BACKGROUND OF THE INVENTION

The present invention relates generally to electrical rotating machines and more particularly to obtaining operational data from the rotor surface of an electrical rotating machine.

One of the primary causes of damage to an electrical rotating machine such as an electric motor is overheating. In the case of an electric motor, overheating can permanently destroy the motor or lead to a significant reduction in its useful life. Some of the reasons for overheating include overload, poor power conditions, high effective service factor, frequent stops and starts, and environmental issues. Because of these reasons for overheating, electric motors generally need to be de-rated in order to maximize useful life. In order to prevent overheating of electric motors it is desirable to limit the temperature of the motors or at least detect warning conditions leading to overheating, and ultimately failure of the motors. However, current approaches to limiting temperature of electric motors and detecting conditions indicative of overheating are not effective.

### BRIEF DESCRIPTION OF THE INVENTION

In one aspect of the present invention, a system for monitoring a surface of a rotor is provided. In this embodiment, the system comprises at least one radio frequency identification (RFID) tag with an integrated sensor placed on the rotor to measure operational data therefrom. An RFID reader reads the operational data measured from the rotor by the at least one RFID tag with the integrated sensor in real time.

In another aspect of the present invention, a system for monitoring a rotor surface of an electrical rotating machine is provided. In this aspect of the present invention, the system comprises at least one radio frequency identification (RFID) tag with an integrated sensor placed about the surface of the rotor to measure operational data of the electrical rotating machine. An RFID reader reads the operational data measured on the surface of the rotor by the at least one RFID tag with the integrated sensor in real time. A computing unit is configured to receive and process the measured operational data from the RFID reader.

In a third aspect of the present invention, a system for monitoring the temperature of a rotor surface of an electric motor is disclosed. In this aspect of the present invention, the system comprises at least one radio frequency identification (RFID) tag with an integrated temperature sensor placed on the surface of the rotor to measure the temperature of the surface of the rotor. An RFID reader reads temperature measurements of the surface of the rotor as measured by the at least one RFID tag with the integrated sensor in real time.

### BRIEF DESCRIPTION OF THE DRAWINGS

FIG. 1 is a schematic cross-sectional diagram of an electric motor having at least one radio frequency identification (RFID) tag with an integrated sensor placed on the surface of the rotor to measure operational data according to an embodiment of the present invention; and
FIG. 2 is a schematic diagram showing an RFID tag with the integrated sensor placed on the rotor of an electric motor and used in conjunction with an RFID reader and computing unit, according to one embodiment of the present invention.

### DETAILED DESCRIPTION OF THE INVENTION

Various embodiments of the present invention are directed to monitoring a rotor surface of an electrical rotating machine such as an electric motor. In one embodiment, at least one radio frequency identification (RFID) tag with an integrated sensor is placed on the surface of the rotor of the electrical rotating machine to measure operational data of the machine. In one embodiment, the at least one RFID tag with integrated sensor may comprise at least one of a temperature sensor, vibration sensor, velocity sensor, motion sensor, pressure sensor and combinations thereof. An RFID reader reads the operational data measured on the surface of the rotor by the at least one RFID tag with the integrated sensor in real time. In one embodiment, a computing unit (e.g., a host computer, controller, etc.) may receive the measured operational data from the RFID reader, which can perform remote monitoring and diagnostics of the rotor based on the measured operational data, control operation of the rotor based on the measured operational data, and control temperature of the rotor surface based on the measured operational data.

Technical effects of the various embodiments of the present invention include maximizing the useful life of the electrical rotating machine by using operational data detected from the surface of the rotor to prevent overheating or detecting conditions that are indicative of incipient failure due to overheating. Other technical effects associated with the various embodiments of the present invention include controlling operation of the electrical rotating machine and monitoring and diagnosing problems of the machine based on operational data detected from the surface of the rotor.

Although various embodiments of the present invention are described with respect to a rotor used with an electrical rotating machine such as an electric motor, the embodiments are not limited to use solely with an electric motor. Those skilled in the art will recognize that the various embodiments of the present invention are suitable for use with other electrical rotating machines. A non-exhaustive list of other electrical rotating machines where the various embodiments of the present invention are suitable for use include an electric generator or alternator.

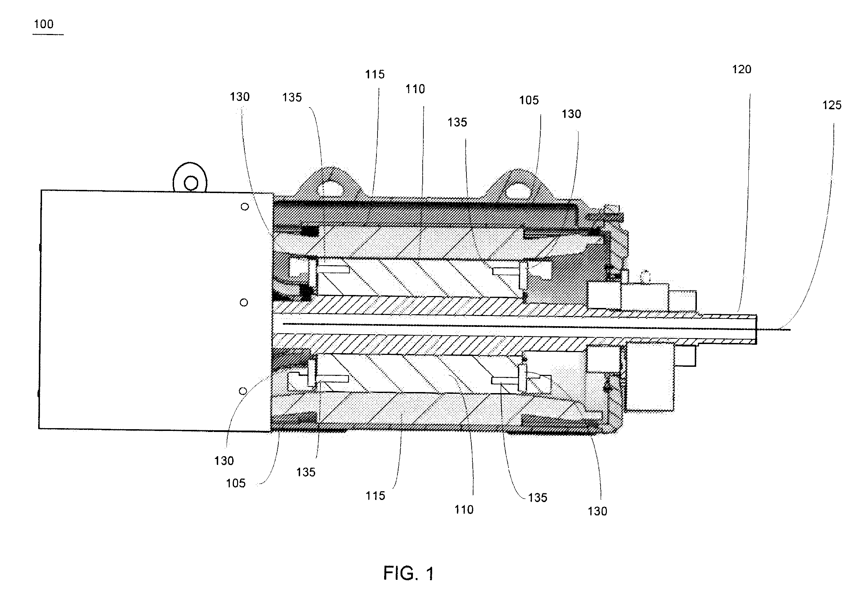

Referring to the drawings, FIG. 1 is a schematic cross-sectional diagram of an electrical rotating machine 100 (e.g., electric motor or generator) according to an embodiment of the present invention. Hereinafter, electrical rotating machine 100 will be referred to as an electric motor, for ease of description only, and is not intended to limit embodiments of the present invention. In one embodiment, electric motor 100 may be a synchronous motor, however, it will be apparent to those skilled in the art that the scope of the various embodiments of the present invention are suitable for use with other electric motors such as direct current (DC) motors or induction motors. As shown in FIG. 1, electric motor 100 includes a stator 105 enclosing a rotor 110. A winding 115, wound around rotor 110, is configured to produce a rotating, multi-polar, magnetic field. Rotor 110 includes a shaft 120 that supports the rotor for rotation relative to stator 105 about a rotor axis 125.

Electric motor 100 further includes at least one RFID tag 130 with an integrated sensor 135 placed on or about the surface of a rotor 115 to measure operational data of the motor. RFID tag 130 produces and emits an electromagnetic interrogation field at a specific frequency when excited by electronic drive circuitry (not shown). RFID tags, which are well-known and commercially available, include a semiconductor chip having radio frequency (RF) circuits, logic, and memory, as well as an antenna. RFID tags 130 function in response to a coded RF signal. If RFID tags 130 are positioned within an interrogation field for a sufficient time, the tags will become stimulated and transmit a uniquely coded signal. In one embodiment, the uniquely coded signal can be used to identify electric motor 100 and rotor 115. Sensors 135, which are integrated with RFID tags 130, may be any type of sensor that can be used to obtain information on the operation of electric motor 100. A non-limiting list of possible sensors that may be integrated with RFID tags 130 includes a temperature sensor, vibration sensor, velocity sensor, motion sensor or pressure sensor. In one embodiment, RFID tags 130 with integrated sensors 135 may include a combination of any one of the above-identified sensors. As explained below, measurements from sensor 135 can be used to control operation of electric motor 100. In one embodiment, RFID tags 130 with integrated sensors 135 include temperature sensors such as thermocouples or resistance temperature detectors that are configured to measure the temperature of the surface of rotor 110. As explained below, temperature measurements from the integrated sensor can be used to control the temperature of the surface of rotor 110, and thus to prevent overheating of electric motor 100. RFID tags with integrated temperature sensors are well known and commercially available. An EMBEDSENSE™ wireless sensor from MicroStrain of Williston, Vermont, is one example of an RFID tag with integrated temperature sensor that may be used.

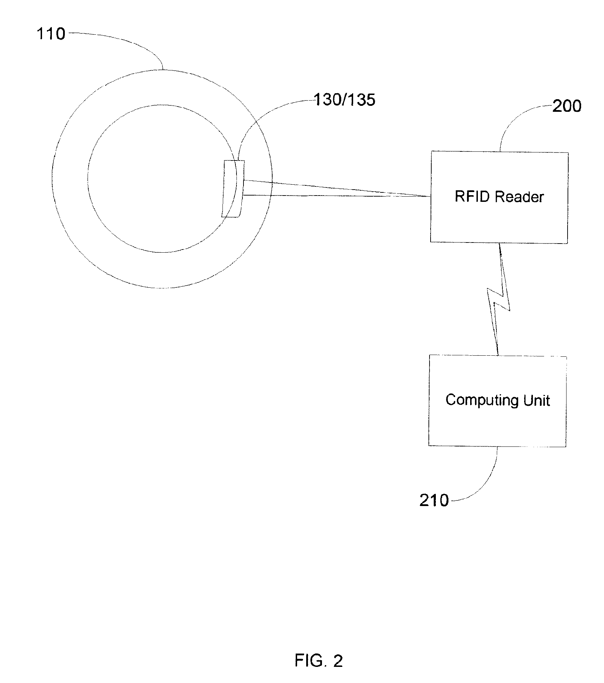

As shown in FIG. 2, an RFID reader 200 reads the operational data measured on the surface of rotor 110 by the at least one RFID tag 130 with the integrated sensor in real time. In one embodiment, RFID reader 200 is located at a location remote from the electric motor 110 (FIG. 1). In another embodiment, RFID reader 200 can be part of the electric motor 110 (FIG. 1) within the terminal box or it can be part of a computer/controller (not shown) that is coupled to the motor. In operation RFID reader 200 detects and records the RF signal from RFID tag 130 and integrated sensor 135 by demodulating the signal. Detecting and recording of the RF signal may be performed as deemed necessary or desirable.

A computing unit 210 is configured to receive the measured operational data and identification information unique to electric motor 100 (FIG. 1) and rotor 110 from RFID reader 200. Computing unit 210 may be implemented as a host computer or a controller. Computing unit 210 may be located within proximity to electric motor 100 (FIG. 1) or remotely located. RFID reader 200 may transmit information from computing unit 210 via a wired or wireless connection. Computing unit 210 may be configured to perform remote monitoring and diagnostics of electric motor 100 (FIG. 1) based on the measured operational data. By continuously monitoring the operational data of electric motor 100 (FIG. 1), such as the temperature of the surface of rotor 110, computing unit 210 can take preventive steps if temperatures are approaching unacceptable levels, in order to prevent overheating and other conditions that may lead to potential failures. In addition, computing unit 210 can be used to control operation of electric motor 100 (FIG. 1) based on the measured operational data in order to perform in a desired manner. Those skilled in the art will recognize that computing unit 210 can perform other processing functions in addition to the ones described above with respect to the various embodiments of the present invention. For example, computing unit 210 can control operation of electric motor 100 (FIG. 1) based on current and voltage measurements in addition to the temperature measurements.

The processing functions performed by computing unit 210 can be implemented in the form of an entirely hardware embodiment, an entirely software embodiment or an embodiment containing both hardware and software elements, which includes but is not limited to firmware, resident software, microcode, etc. Furthermore, the processing functions performed by computing unit 210 can take the form of a computer program product accessible from a computer-usable or computer-readable medium providing program code for use by or in connection with a computer or any instruction execution system (e.g., processing units). For the purposes of this description, a computer-usable or computer readable medium can be any computer readable storage medium that can contain or store the program for use by or in connection with the computer, instruction execution system, apparatus, or device or a computer readable transmission medium that can communicate, propagate or transport the program for use by or in connection with the computer, instruction execution system, apparatus, or device. The computer readable medium can be an electronic, magnetic, optical, electromagnetic, infrared, or semiconductor system (or apparatus or device) or a propagation medium. Examples of a computer-readable medium include a semiconductor or solid state memory, a random access memory (RAM), a read-only memory (ROM), a rigid magnetic disk and an optical disk. Current examples of optical disks include a compact disk - read only memory (CD-ROM), a compact disk - read/write (CD-R/W) and a digital video disc (DVD).

While the disclosure has been particularly shown and described in conjunction with a preferred embodiment thereof, it will be appreciated that variations and modifications will occur to those skilled in the art. Therefore, it is to be understood that the appended claims are intended to cover all such modifications and changes as fall within the true spirit of the disclosure.

Various aspects and embodiments of the present invention are defined by the following numbered clauses:
1. A system for monitoring a surface of a rotor, comprising:
   at least one radio frequency identification (RFID) tag with an integrated sensor placed on the rotor to measure operational data therefrom; and
   an RFID reader that reads the operational data measured from the rotor by the at least one RFID tag with the integrated sensor in real time.
2. The system according to clause 1, further comprising a computing unit that receives the measured operational data from the RFID reader.
3. The system according to clause 2, wherein the computing unit performs remote monitoring and diagnostics of the rotor based on the measured operational data.
4. The system according to clause 2 or clause 3, wherein the computing unit controls operation of the rotor based on the measured operational data.
5. The system according to any preceding clause, wherein the computing unit controls temperature of the rotor surface based on the measured operational data.
6. The system according to any preceding clause, wherein the at least one RFID tag with the integrated sensor comprises at least one of a temperature sensor, vibration sensor, velocity sensor, motion sensor, pressure sensor and combinations thereof.
7. The system according to any preceding clause, wherein the at least one RFID tag with the integrated sensor uniquely identifies the rotor.
8. A system for monitoring a rotor surface of an electrical rotating machine, comprising:
   at least one radio frequency identification (RFID) tag with an integrated sensor placed about the surface of the rotor to measure operational data of the electrical rotating machine;
   an RFID reader that reads the operational data measured on the surface of the rotor by the at least one RFID tag with the integrated sensor in real time; and
   a computing unit configured to receive and process the measured operational data from the RFID reader.
9. The system according to any preceding clause, wherein the computing unit is configured to perform remote monitoring and diagnostics of the electrical rotating machine based on the measured operational data.
10. The system according to any preceding clause, wherein the computing unit is configured to control operation of the electrical rotating machine based on the measured operational data.
11. The system according to any preceding clause, wherein the computing unit controls temperature of the rotor surface based on the measured operational data.
12. The system according to any preceding clause, wherein the at least one RFID tag with the integrated sensor comprises at least one of a temperature sensor, vibration sensor, velocity sensor, motion sensor, pressure sensor and combinations thereof.
13. The system according to any preceding clause, wherein the at least one RFID tag with the integrated sensor uniquely identifies the rotor and electrical rotating machine.
14. The system according to any preceding clause, wherein the electrical rotating machine comprises an electric motor or an electric generator.
15. A system for monitoring temperature of a rotor surface of an electric motor, comprising:
   at least one radio frequency identification (RFID) tag with an integrated temperature sensor placed on the surface of the rotor to measure the temperature of the surface of the rotor; and
   an RFID reader that reads temperature measurements of the surface of the rotor as measured by the at least one RFID tag with the integrated sensor in real time.
16. The system according to any preceding clause, further comprising a computing unit configured to receive the temperature measurements from the RFID reader.
17. The system according to any preceding clause, wherein the computing unit is configured to perform remote monitoring and diagnostics of the electric motor based on the temperature measurements.
18. The system according to any preceding clause, wherein the computing unit is configured to control operation of the electric motor based on the temperature measurements.
19. The system according to any preceding clause, wherein the computing unit controls temperature of the rotor surface based on the temperature measurements.
20. The system according to any preceding clause, wherein the at least one RFID tag with the integrated sensor uniquely identifies the rotor and electric motor.

## Claims

1. A system for monitoring a surface of a rotor (110), comprising:
at least one radio frequency identification (RFID) tag (130) with an integrated sensor (135) placed on the rotor (110) to measure operational data therefrom; and
an RFID reader (200) that reads the operational data measured from the rotor (130) by the at least one RFID tag (130) with the integrated sensor (135) in real time.

2. The system according to claim 1, further comprising a computing unit (210) that receives the measured operational data from the RFID reader (200).

3. The system according to any preceding claim, wherein the computing unit (210) controls operation of the rotor (110) based on the measured operational data.

4. The system according to any preceding claim, wherein the computing unit (210) controls temperature of the rotor (110) surface based on the measured operational data.

5. The system according to any preceding claim, wherein the at least one RFID tag (130) with the integrated sensor (135) comprises at least one of a temperature sensor, vibration sensor, velocity sensor, motion sensor, pressure sensor and combinations thereof.

6. The system according to any preceding claim, wherein the at least one RFID tag (130) with the integrated sensor (135) uniquely identifies the rotor (110).

7. A system for monitoring a rotor (110) surface of an electrical rotating machine (100), comprising:
at least one radio frequency identification (RFID) tag (130) with an integrated sensor (135) placed about the surface of the rotor (110) to measure operational data of the electrical rotating machine (100);
an RFID reader (200) that reads the operational data measured on the surface of the rotor (110) by the at least one RFID tag (130) with the integrated sensor (135) in real time; and
a computing unit (210) configured to receive and process the measured operational data from the RFID reader (200).

8. A system for monitoring temperature of a rotor (110) surface of an electric motor (100), comprising:
at least one radio frequency identification (RFID) tag (130) with an integrated temperature sensor (135) placed on the surface of the rotor (110) to measure the temperature of the surface of the rotor (110); and
an RFID reader (200) that reads temperature measurements of the surface of the rotor (110) as measured by the at least one RFID tag (130) with the integrated sensor (135) in real time.

9. The system according to claim 8, further comprising a computing unit (210) configured to receive the temperature measurements from the RFID reader (200).

10. The system according to claim 8 or claim 9, wherein the computing unit (210) is configured to perform at least one of remote monitoring and diagnostics of the electric motor (100) based on the temperature measurements and controlling operation of the electric motor (100) based on the temperature measurements.
